(19) **Europäisches Patentamt / European Patent Office / Office européen des brevets**

(11) **EP 2 457 456 B1**

(12) **EUROPEAN PATENT SPECIFICATION**

(45) Date of publication and mention
of the grant of the patent:
**15.01.2014 Bulletin 2014/03**

(51) Int Cl.:
*A41H 43/04* *(2006.01)*   *B29C 65/52* *(2006.01)*
*D06H 5/00* *(2006.01)*   *A41D 27/24* *(2006.01)*

(21) Application number: **11187560.5**

(22) Date of filing: **02.11.2011**

(54) **Cloth bonding apparatus and computer-readable storage medium storing control program**

Vorrichtung zum Verbinden von Stoff und computerlesbares Speichermedium mit darauf gespeichertem Steuerprogramm

Appareil de liaison de tissus et support lisible par un ordinateur stockant le programme de commande

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.11.2010 JP 2010265445**

(43) Date of publication of application:
**30.05.2012 Bulletin 2012/22**

(73) Proprietor: **Brother Kogyo Kabushiki Kaisha Nagoya-shi, Aichi 467-8561 (JP)**

(72) Inventors:
  • **Nishimura, Kazuto**
    **Nagoya-shi, Aichi 467-8562 (JP)**
  • **Umeda, Kazutoshi**
    **Nagoya-shi, Aichi 467-8562 (JP)**
  • **Iwakoshi, Hiroyasu**
    **Nagoya-shi, Aichi 467-8562 (JP)**
  • **Yamaura, Hiroki**
    **Nagoya-shi, Aichi 467-8562 (JP)**
  • **Nemoto, Yoshimitsu**
    **Nagoya-shi, Aichi 467-8562 (JP)**
  • **Minagawa, Yuichiro**
    **Nagoya-shi, Aichi 467-8562 (JP)**
  • **Enya, Tetsuji**
    **Nagoya-shi, Aichi 467-8562 (JP)**
  • **Horibe, Yoshihiko**
    **Nagoya-shi, Aichi 467-8562 (JP)**

(74) Representative: **Prüfer & Partner GbR European Patent Attorneys Sohnckestrasse 12 81479 München (DE)**

(56) References cited:
**EP-A1- 2 216 162     EP-A1- 2 216 165
US-B1- 6 902 639**

## Description

BACKGROUND

The present invention relates to a cloth bonding apparatus that bonds a cloth to a cloth, and to a computer-readable storage medium storing a control program for the cloth bonding apparatus.

A cloth bonding apparatus bonds a cloth to a cloth with an adhesive instead of sewing the cloths together with a needle and a thread. When sewing the cloth to the cloth using the thread, the thread appears on the cloth surface and unevenness occurs. As the cloth bonding apparatus bonds the cloth and the cloth with the adhesive, there is no unevenness on the cloth surface. After processing by the cloth bonding apparatus, the surface of the cloth is smooth. Therefore, the cloth bonding apparatus can create clothing etc. that causes no discomfort when touched by skin.

With a cloth bonding apparatus disclosed in Japanese Laid-Open Patent Publication No. 2010-180487, a thickness of the adhesive applied to the cloth and a width of a discharge opening of a nozzle that discharges the adhesive can be set. The cloth bonding apparatus determines a transport speed of the cloth from an amount of depression of a pedal that is depressed by an operator. The cloth bonding apparatus calculates an amount of adhesive per unit time that is discharged from the nozzle. Amount of adhesive per unit time ($m^3/s$) = cloth transport speed (m/s) x thickness of adhesive (m) x width of discharge opening (m)

In order to discharge the adhesive from the nozzle, the cloth bonding apparatus has a gear pump and a motor that drives the gear pump. In order to discharge the calculated amount of adhesive from the nozzle, the cloth bonding apparatus determines a rotational speed of the gear pump. The cloth bonding apparatus can thus apply the adhesive to the cloth at an application thickness set by the operator.

SUMMARY

There are limitations on a capability of the motor that drives the gear pump. When driving the motor such that the gear pump has the above-described determined rotational speed, the capability of the motor is sometimes exceeded. At this time, a rotation state of the motor becomes unstable, and the thickness of the adhesive attached to the cloth becomes uneven. There is thus a problem that the cloth bonding apparatus cannot appropriately bond the cloth and the cloth.

It is an object of the present invention to provide a cloth bonding apparatus and a computer-readable storage medium storing a control program that are capable of stably applying adhesive to a cloth and appropriately bonding a cloth to a cloth.

According to a first aspect of the present invention, there is provided a cloth bonding apparatus that has a nozzle having a discharge opening that discharges adhesive onto a cloth, a supply portion that supplies the adhesive to the nozzle, and a transport portion that presses and moves the cloth. The cloth bonding apparatus includes: a first acquisition portion that acquires an application thickness, a discharge width, and a transport speed, the application thickness being a thickness of the adhesive that is applied to the cloth, the discharge width being a width of the discharge opening in a direction that intersects with a transport direction of the cloth, and the transport speed being a speed at which the transport portion moves the cloth; a determination portion that determines whether the supply portion can operate at a supply condition to apply the adhesive at the application thickness to the cloth that is moved at the transport speed; a correction portion that, when the determination portion determines that the supply portion cannot operate at the supply condition, corrects at least one of the supply condition and a transport condition to move the cloth at the transport speed; and a control portion that controls the supply portion at a corrected supply condition when the correction portion corrects the supply condition, and controls the transport portion at a corrected transport condition when the correction portion corrects the transport condition.

The cloth bonding apparatus can operates the supply portion in a stable manner based on the corrected supply condition and discharge the adhesive from the nozzle. The cloth bonding apparatus can stabilize the thickness of the adhesive applied to the cloth and can thus appropriately bond the cloth to another cloth. As the cloth bonding apparatus operates the transport portion based on the corrected transport condition, even when the supply portion cannot be operated at the supply condition, a desired thickness of adhesive can be applied to the cloth. Thus, the cloth bonding apparatus can apply the adhesive to the cloth at the optimum thickness and reliably bond the cloth to the other cloth.

In the cloth bonding apparatus according to a second aspect of the present invention, the supply portion includes a gear pump that is rotationally driven and feeds the adhesive and the transport portion includes a roller that is rotationally driven and moves the cloth. The supply condition is a gear speed that is a rotational speed of the gear pump required to move the cloth at the transport speed and to apply the adhesive to the cloth at the application thickness, and the transport condition is a roller speed that is a rotational speed of the roller required to move the cloth at the transport speed. The cloth bonding apparatus can drive the gear pump in a stable manner at the corrected gear speed. As a result, the cloth bonding apparatus can stabilize an amount of the adhesive that the gear pump supplies to the nozzle. The cloth bonding apparatus uses the roller to press and move the cloth, and can bond the cloth and the other cloth. By driving the roller at the corrected roller speed, the cloth bonding apparatus can apply the adhesive of the optimum thickness to the cloth.

In the cloth bonding apparatus according to a third aspect of the present invention, the correction portion corrects the roller speed and the gear speed. As the cloth bonding apparatus corrects the roller speed and the gear speed, an operator can accurately perform a bonding operation at a chosen application thickness.

According to a fourth aspect of the present invention, the cloth bonding apparatus further includes a second acquisition portion, which acquires a maximum gear speed that is a maximum rotational speed that can be tolerated by the gear pump. When the roller speed is larger than a maximum roller speed, which is a rotational speed of the roller required to drive the gear pump at the maximum gear speed and to apply the adhesive to the cloth at the application thickness, the determination portion determines that the gear pump cannot be driven at the gear speed. The correction portion corrects the gear speed to the maximum gear speed and corrects the roller speed to the maximum roller speed. As the cloth bonding apparatus corrects the gear speed to the maximum gear speed, the gear pump can be driven at a condition that can be tolerated by the gear pump. As a result, the cloth bonding apparatus can drive the gear pump in an even more stable manner. In addition to correcting the gear speed, the cloth bonding apparatus also corrects the roller speed to the maximum roller speed and thus the bonding operation can be performed rapidly.

According to a fifth aspect of the present invention, there is provided a computer-readable storage medium storing a control program of a cloth bonding apparatus. The computer-readable storage medium stores the control program that is executed by the cloth bonding apparatus that has a nozzle having a discharge opening that discharges adhesive onto a cloth, a supply portion that supplies the adhesive to the nozzle, and a transport portion that presses and moves the cloth. The control program includes instructions that command a computer of the cloth bonding apparatus to perform the steps of: acquiring an application thickness, a discharge width, and a transport speed, the application thickness being a thickness of the adhesive that is applied to the cloth, the discharge width being a width of the discharge opening in a direction that intersects with a transport direction of the cloth, and the transport speed being a speed at which the transport portion moves the cloth; determining whether the supply portion can operate at a supply condition to apply the adhesive at the application thickness to the cloth that is moved at the transport speed; correcting, when it is determined in the determining step that the supply portion cannot operate at the supply condition, at least one of the supply condition and a transport condition to move the cloth at the transport speed; and controlling the supply portion at a corrected supply condition when the supply condition is corrected in the correcting step, and controlling the transport portion at a corrected transport condition when the transport condition is corrected in the correcting step.

As a result, the cloth bonding apparatus can operate the supply portion in a stable manner based on the corrected supply condition and discharge the adhesive from the nozzle. The cloth bonding apparatus can stabilize the thickness of the adhesive applied to the cloth and thus can appropriately bond the cloth and another cloth. The cloth bonding apparatus operate the transport portion based on the corrected transport condition. As a result, even when the supply portion cannot be operated at the supply condition, the cloth bonding apparatus can apply the adhesive of a desired thickness to the cloth. Thus, the cloth bonding apparatus can apply the adhesive of an optimum thickness to the cloth and can reliably bond the cloth and the other cloth.

## BRIEF DESCRIPTION OF THE DRAWING

Exemplary embodiments of the invention will be described below in detail with reference to the accompanying drawings in which:

FIG. 1 is a perspective view of a cloth bonding apparatus;

FIG. 2 is a perspective view of a bonding device;

FIG. 3 is a left side view of the bonding device;

FIG 4 is a perspective view of an internal structure of the bonding device;

FIG. 5 is a curved cross sectional view in the direction of arrows of a line I-I in FIG. 2;

FIG. 6 is a block diagram of an electrical configuration of the cloth bonding apparatus;

FIG. 7 is a diagram of a drive condition table;

FIG. 8 is a diagram of a parameter table;

FIG. 9 is a perspective view of the vicinity of a nozzle at a time of a bonding operation; and

FIG 10 is a flowchart of bonding processing.

## DETAILED DESCRIPTION OF THE EXEMPLARY EMBODIMENTS

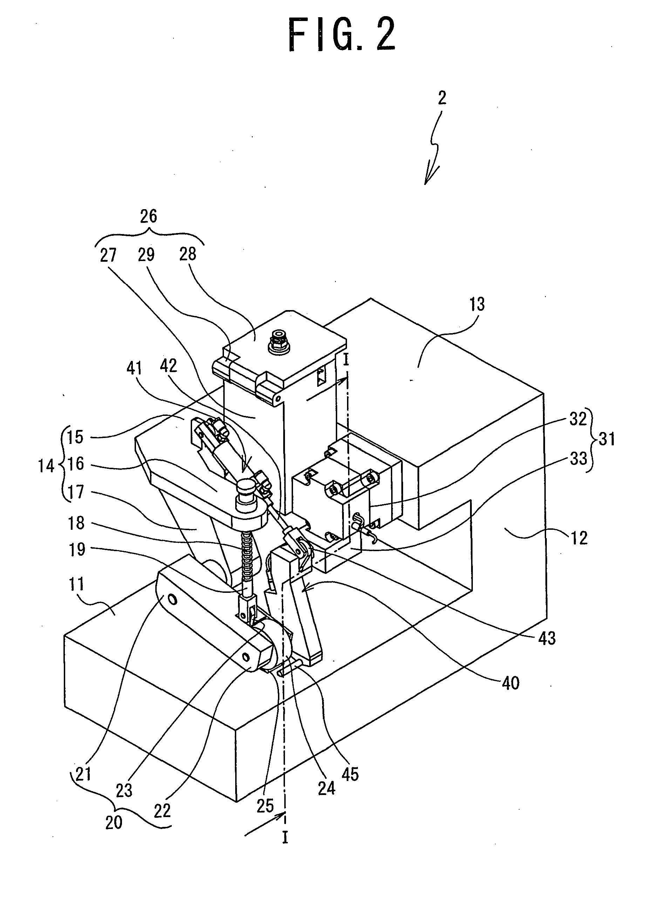

A cloth bonding apparatus 1 of the present invention will be explained with reference to the drawings. The right diagonal upper side, the left diagonal lower side, the right diagonal lower side, and the left diagonal upper side in FIG. 2 respectively correspond to the right side, the left side, the front side, and the rear side of a bonding device 2.

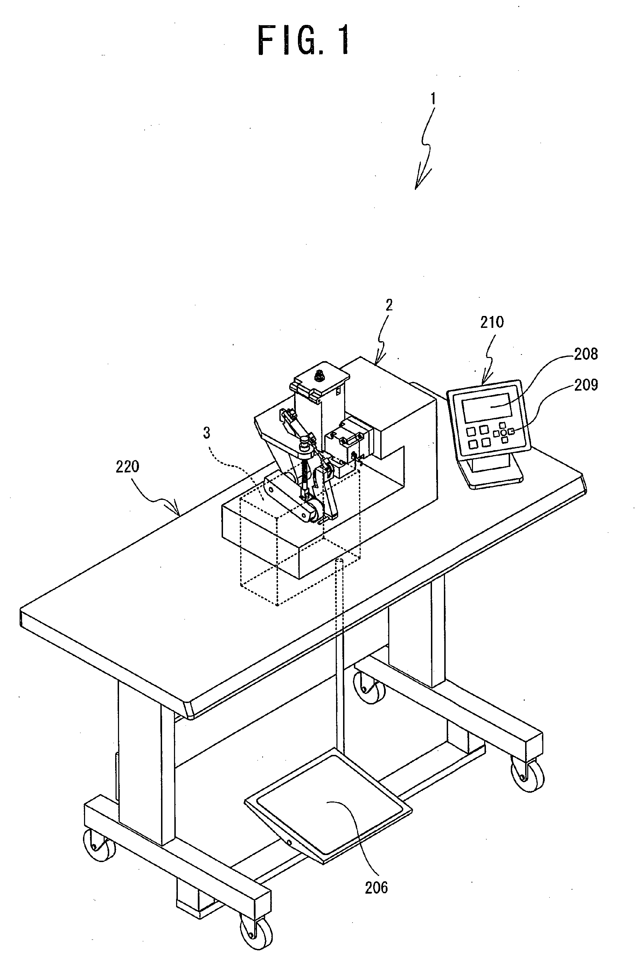

A structure of the cloth bonding apparatus 1 will be explained with reference to FIG. 1. The cloth bonding apparatus 1 is provided with the bonding device 2, a pedal 206, and an operation panel 210. The bonding device 2 and the operation panel 210 are fixed to a table 220. The bonding device 2 attaches adhesive between two layers of cloth that are arranged facing each other. The bonding device 2 presses and moves the cloth to which the adhesive is attached. The two layers of cloth are bonded by undergoing the above-described operation of the bonding device 2. A structure of the bonding device 2 will be described in more detail later.

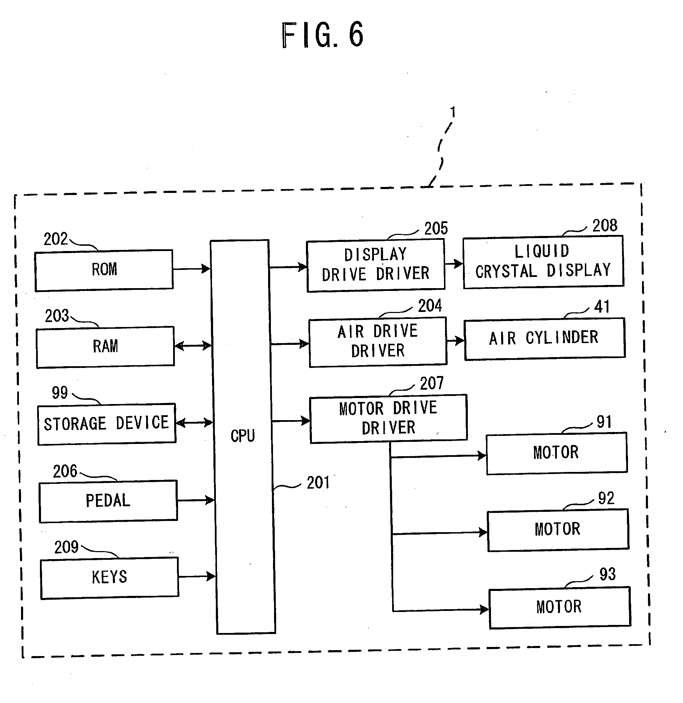

The operation panel 210 is provided with a liquid crystal display 208 and a plurality of keys 209. The liquid crystal display 208 displays a variety of information. The keys 209 perform various inputs. An operator operates the keys 209 while viewing the liquid crystal display 208 and thus sets various operations of the bonding device 2. The pedal 206 is turnably supported on a lower edge of the table 220. The operator can adjust a transport speed of the cloth by adjusting an amount of depression of the pedal 206. A control box 3 is fixed to a rear surface of the table 220. The control box 3 stores a control board on which is mounted a CPU 201 (refer to FIG. 6) and the like. The control box 3 is electrically connected to the bonding device 2, the operation panel 210, and the pedal 206.

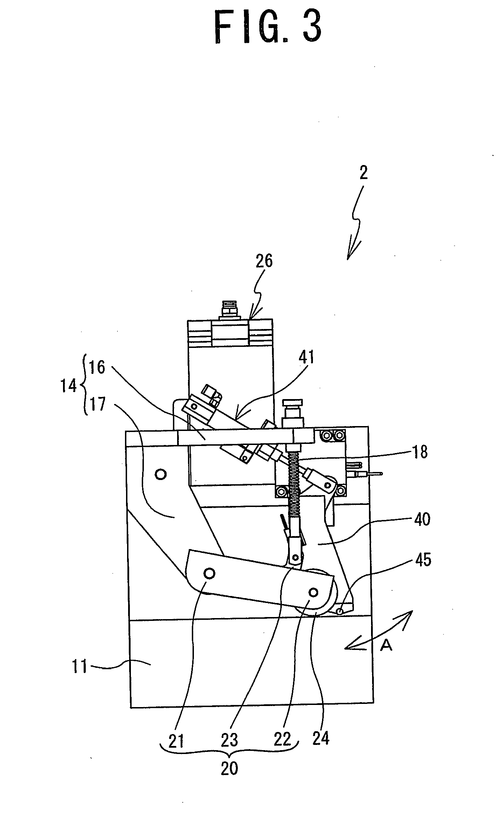

The structure of the bonding device 2 will be explained with reference to FIG. 2 and FIG 3. The bonding device 2 is provided with a bed portion 11, a pillar portion 12 and, an arm portion 13. The bed portion 11 has a substantially cubic shape. The pillar portion 12 extends vertically upward from the right end of the bed portion 11. The arm portion 13 is connected to the upper end of the pillar portion 12, and projects toward the left from the left side face of the pillar portion 12. A left end portion of the arm portion 13 supports a pump casing 31, a storage chamber 26, and a beam portion 14, in order starting from the front.

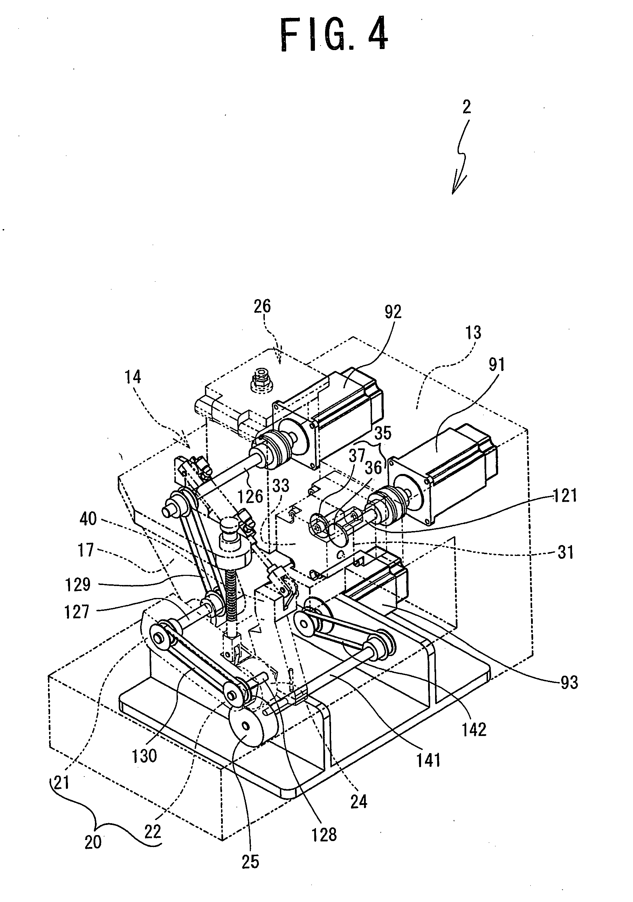

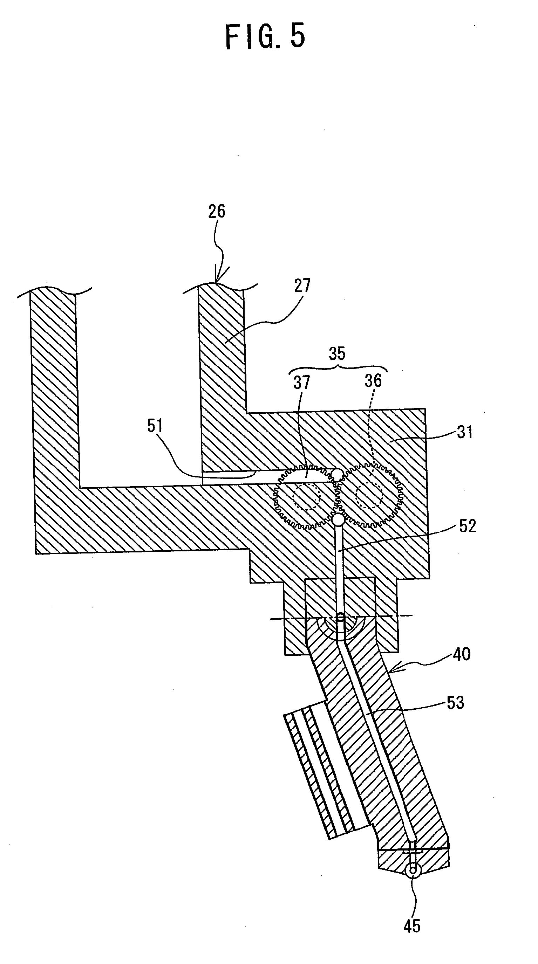

The pump casing 31 is provided with a first pump casing 32 and a second pump casing 33. The first pump casing 32 is fixed to the left side face of the arm portion 13. A gear pump 35 (refer to FIG 4 and FIG. 5) is provided inside the first pump casing 32. The gear pump 35 supplies the adhesive to a nozzle 45. The second pump casing 33 extends downward from the bottom left edge face of the first pump casing 32. An axis portion (not shown in the drawings) is provided on the left side of the second pump casing 33. The axis portion is connected to the top edge on the right side of a support portion 40 such that the support portion 40 is swingably supported. The pump casing 31 is provided with a first flow channel 51 and a second flow channel 52 (refer to FIG. 5). The first flow channel 51 feeds the adhesive from the storage chamber 26 to the gear pump 35. The second flow channel 52 feeds the adhesive from the gear pump 35 to the support portion 40.

The support portion 40 has a substantially cubic shape. A slight gap is provided between the lower edge of the support portion 40 and the bed portion 11. The nozzle 45 is provided on the lower edge of the support portion 40. The nozzle 45 extends to the left side from the support portion 40. A drive transmission portion 43 is provided on the upper edge of the support portion 40. The drive transmission portion 43 supports a movable portion 42 of an air cylinder 41. When the movable portion 42 of the air cylinder 41 moves back and forth, the support portion 40 swings in the front-rear direction (in the direction of arrows A shown in FIG 3) with the axis portion of the upper edge of the support portion 40 as the center axis. In accordance with the swinging of the support portion 40, the nozzle 45 moves to a position at a time of performing a bonding operation and a position at a time of performing maintenance.

The nozzle 45 is cylindrically shaped, and has a discharge opening that discharges the adhesive. When the operator performs the cloth bonding operation, the discharge opening faces the bed portion 11. When the bonding operation is performed, the operator inserts the nozzle 45 between two layers of cloth that are arranged facing each other. The gear pump 35 supplies the adhesive to the nozzle 45 via a third flow channel 53 (refer to FIG. 5) inside the support portion 40. The nozzle 45 discharges the adhesive onto the cloth from the discharge opening. The adhesive attaches to the surface of the cloth that is positioned underneath the nozzle 45.

The storage chamber 26 has a substantially cubic shape, and extends upward from the left side of the arm portion 13 and the rear side portion of the pump casing 31. The storage chamber 26 is provided with a main body 27, a lid portion 28 and, a lid axis portion 29. The main body 27 has a bottomed tubular shape, of which the upper portion is open. The lid portion 28 covers the upper portion opening of the main body 27. The lid axis portion 29 is provided on the upper edge of the main body 27. The lid axis portion 29 supports the lid portion 28 such that the lid portion 28 can be opened and closed. The storage chamber 26 stores the adhesive inside the main body 27. The storage chamber 26 supplies the stored adhesive to the nozzle 45 as necessary.

The beam portion 14 is provided with a body portion 15, a spring support portion 16, and a column portion 17. The body portion 15 extends in a horizontal direction to the left from the left rear edge of the arm portion 13. The spring support portion 16 is plate-shaped and extends in a horizontal direction toward the front from the left end of the body portion 15. The column portion 17 extends diagonally downward toward the front from the body portion 15 at an angle of approximately 45 degrees from the horizontal plane. The lower end of the column portion 17 is separated from the bed portion 11.

The spring support portion 16 has a hole in its front end portion. The spring support portion 16 supports a shaft portion 19 such that the shaft portion 19 can move up and down. The shaft portion 19 is inserted through a spring 18. The upper end portion of the shaft portion 19 is inserted into the hole in the spring support portion 16.

A shaft (not shown in the drawings), which extends in the left-right direction, is provided on the left side of the lower end of the column portion 17. The shaft supports a rear end portion 21 of a roller holding portion 20. The roller holding portion 20 can pivot around the shaft such that a front end portion 22 moves in the up-down direction. On the body portion 15, the air cylinder 41 is provided on the right side of the spring support portion 16. The air cylinder 41 switches a position of the support portion 40.

The front end portion 22 of the roller holding portion 20 rotatably supports a cylindrical upper feed roller 24. The upper feed roller 24 is positioned close to and to the rear of the nozzle 45. The roller holding portion 20 has a shaft support portion 23 to the front and on the upper surface. The shaft support portion 23 supports the shaft portion 19. The spring 18 occupies the space between the spring support portion 16 and the lower portion of the shaft portion 19. The spring 18 energizes the roller holding portion 20 downward by energizing the shaft portion 19, to which the roller holding portion 20 is connected, downward.

An internal structure of the bonding device 2 will be explained with reference to FIG 4. The bonding device 2 is provided with motors 91 to 93 and the like in its interior. The motor 91 drives the gear pump 35 by transmitting a rotational driving force to the gear pump 35 via a rotating shaft 121. The gear pump 35 is provided with a drive gear 36 and a driven gear 37. The drive gear 36 rotates along with the rotating shaft 121. The driven gear 37 meshes with the drive gear 36. The drive gear 36 and the driven gear 37 supply the adhesive to the nozzle 45.

The motor 92 drives the upper feed roller 24 by transmitting a rotational driving force to the upper feed roller 24 via rotating shafts 126 to 128 and belts 129 and 130. The motor 93 drives a lower feed roller 25 by transmitting a rotational driving force to the lower feed roller 25 via a rotating shaft 141 and a belt 142. The lower feed roller 25 has a cylindrical shape and is fixed to the rotating shaft 141. The lower feed roller 25 is positioned below the upper feed roller 24 and inside the bed portion 11.

The flow channels of the adhesive will be explained with reference to FIG. 5. The main body 27 of the storage chamber 26 has a peripheral wall and a bottom wall. The main body 27 stores the adhesive in a space encompassed by the peripheral wall and the bottom wall. The first flow channel 51 is a through hole that extends from the peripheral wall of the storage chamber 26 toward the pump casing 31. The first flow channel 51 feeds the adhesive stored in the main body 27 to the gear pump 35. The first flow channel 51 leads from the storage chamber 26 to a center inside the first pump casing 32 of the pump casing 31. In the center section inside the first pump casing 32, the first flow channel 51 is bent at a right angle toward the right, and leads to a position above a section at which the drive gear 36 and the driven gear 37 mesh together.

The second flow channel 52 feeds the adhesive that has passed through the pump casing 35 to the third flow channel 53 of the support portion 40. The second flow channel 52 extends to the left from the lower edge of the section at which the drive gear 36 and the driven gear 37 mesh together. The second flow channel 52 that extends to the left is bent downward, and its lower edge is bent to the left, reaching inside the upper edge of the support portion 40. The third flow channel 53 feeds the adhesive that flows through the second flow channel 52 to the nozzle 45. The third flow channel 53 extends from the upper edge to the lower edge inside the support portion 40, and is connected to the nozzle 45.

The electrical configuration of the cloth bonding apparatus 1 will be explained with reference to FIG 6. The cloth bonding apparatus 1 is provided with the CPU 201, a ROM 202, a RAM 203 and a storage device 99. The CPU 201 performs reception processing and control processing. In the reception processing, input information from the keys 209 and the pedal 206 etc. is received. The control processing controls the motors etc. The ROM 202 stores programs executed by the CPU 201 and various initial setting parameters etc. The RAM 203 stores a timer value, a counter value, flags and, a drive condition table 211 that will be described later. The storage device 99 stores a parameter table 991 that will be described later. The CPU 201 is electrically connected to each of the ROM 202, the RAM 203 and the storage device 99.

The pedal 206 is electrically connected to the CPU 201. The operator operates the pedal 206 when adjusting a transport speed of the cloth. The CPU 201 recognizes an amount of depression of the pedal 206. The keys 209 are electrically connected to the CPU 201. The CPU 201 recognizes a state of depression of the keys 209 by the operator. The CPU 201 stores information input by the operator in the storage device 99, based on the state of depression of the keys 209 recognized by the CPU 201. A display drive driver 205 is electrically connected to the CPU 201. The display drive driver 205 is electrically connected to the liquid crystal display 208. The CPU 201 displays selected information on the liquid crystal display 208 via the display drive driver 205.

An air drive driver 204 is electrically connected to the CPU 201. The air cylinder 41 is electrically connected to the air drive driver 204. The CPU 201 controls a pressure of air fed into the air cylinder 41 via the air drive driver 204. A motor drive driver 207 is electrically connected to the CPU 201. The motors 91 to 93 are each electrically connected to the motor drive driver 207. The CPU 201 controls the motors 91 to 93 via the motor drive driver 207.

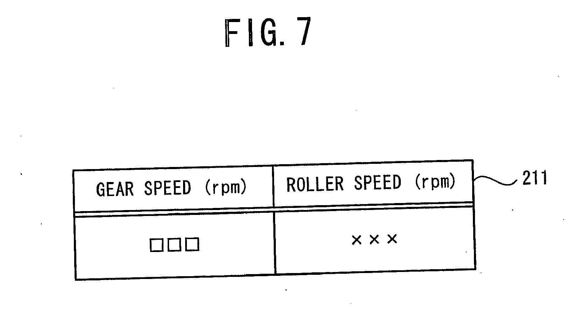

The drive condition table 211 that is stored in the RAM 203 will be explained with reference to FIG. 7. The drive condition table 211 stores a gear speed and a roller speed. The gear speed is a rotation speed of the drive gear 36 and the driven gear 37 at the time of the bonding operation. The roller speed is a rotation speed of the upper feed roller 24 and the lower feed roller 25 at the time of the bonding operation. In the bonding operation, the cloth bonding apparatus 1 controls the motor 91 such that the motor 91 drives the drive gear 36 and the driven gear 37 at the gear speed stored in the drive condition table 211. In the bonding operation, the cloth bonding apparatus 1 controls the motors 92 and 93 such that they drive the upper feed roller 24 and the lower feed roller 25 at the roller speed stored in the drive condition table 211.

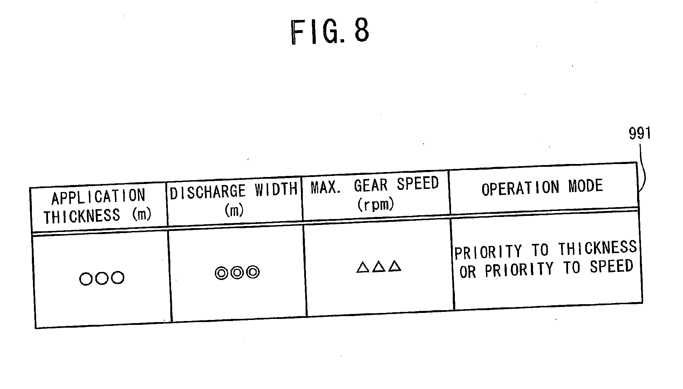

The parameter table 991 will be explained with reference to FIG. 8. The parameter table 991 stores an application thickness, a discharge width, and a maximum gear speed. The application thickness is a thickness of the adhesive that is applied to the cloth. The discharge width is a width of the discharge opening of the nozzle 45 in a direction that intersects with the transport direction of the cloth (namely, in the left-right direction). The maximum gear speed is a maximum rotation speed of the motor 91 that drives the drive gear 36 and the driven gear 37. The operator inputs the application thickness, the discharge width, and the maximum gear speed via the keys 209 before the bonding operation. The CPU 201 stores the application thickness, the discharge width, and the maximum gear speed input by the operator in the parameter table 991.

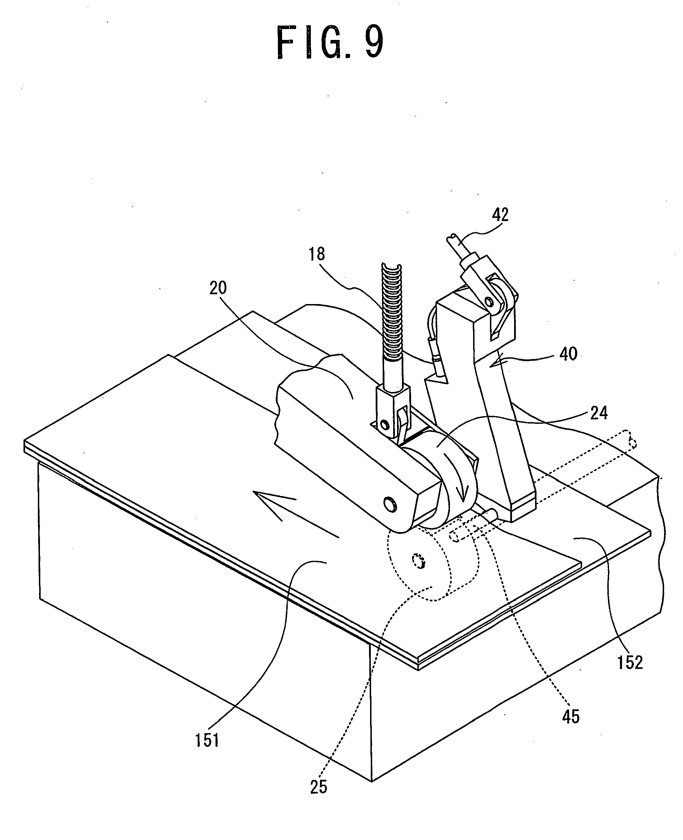

Operations of the bonding device 2 at the time of the bonding operation to bond an upper cloth 151 and a lower cloth 152 will be explained with reference to FIG. 9. When the bonding operation is performed, the bonding device 2 moves the movable portion 42 of the air cylinder 41 (refer to FIG. 2) to the front, and thus moves the support portion 40 to a position of use. The operator arranges the upper cloth 151 and the lower cloth 152 to overlap with each other. The operator arranges the nozzle 45 on a section of the cloth to be bonded. The upper feed roller 24 and the lower feed roller 25 sandwich the upper cloth 151 and the lower cloth 152 at the rear of the nozzle 45.

The operator depresses the pedal 206 (refer to FIG. 1) to drive the gear pump 35 (refer to FIG. 4 and FIG. 5). As the gear pump 35 is driven, the adhesive is discharged downward from the discharge opening of the nozzle 45 via the flow channels 51 to 53 (refer to FIG. 5), and attaches to the lower cloth 152. The upper feed roller 24 and the lower feed roller 25 rotate in a direction such that the upper cloth 151 and the lower cloth 152 move from the front to the rear. The spring 18 energizes the upper feed roller 24 downward. Therefore, the upper feed roller 24 and the lower feed roller 25 press the upper cloth 151 onto the lower cloth 152 to which the adhesive is attached, and thus bond the upper cloth 151 and the lower cloth 152.

The cloth bonding apparatus 1 drives the upper feed roller 24 and the lower feed roller 25 at a roller speed that is in accordance with the amount of depression of the pedal 206. Therefore, the cloth bonding apparatus 1 moves the cloth at a transport speed that is in accordance with the amount of depression of the pedal 206. The cloth bonding apparatus 1 determines the gear speed using the following procedure in order to apply the adhesive to the cloth at the application thickness stored in the parameter table 991. The cloth bonding apparatus 1 uses Formula (1) to calculate an amount per unit time of the adhesive discharged from the nozzle 45, based on the transport speed of the cloth that is in accordance with the amount of depression of the pedal 206 and on the application thickness and the discharge width stored in the parameter table 991.

$$\text{Amount of adhesive per unit time } (m^3/s) = \text{cloth transport speed } (m/s) \times$$
$$\text{application thickness } (m) \times \text{discharge width } (m) \qquad \text{Formula (1)}$$

The cloth bonding apparatus 1 determines the gear speed of the drive gear 36 and the driven gear 37 that is necessary to supply the calculated amount of adhesive to the nozzle 45. The gear speed is calculated using a coefficient that is stored in the ROM 202 in advance (based on a supply amount of the adhesive per each rotation of the motor 91) and using the amount of adhesive per unit time. The cloth bonding apparatus 1 drives the drive gear 36 and the driven gear 37 at the determined gear speed. Thus, the cloth bonding apparatus 1 applies the adhesive to the cloth at the application thickness stored in the parameter table 991.

There are cases in which the above-described determined gear speed exceeds the maximum gear speed of the parameter table 991. When the motor 91 rotates such that the drive gear 36 and the driven gear 37 are driven at the above-described gear speed, the rotation speed of the motor 91 becomes unstable. As a result, the operation of the gear pump 35 becomes unstable and it is possible that the adhesive cannot be supplied to the nozzle 45 in a stable manner. When the determined gear speed exceeds the maximum gear speed, the cloth bonding apparatus 1 lowers the gear speed to the maximum gear speed and also lowers the roller speed. As the gear speed is lowered to the maximum gear speed, the cloth bonding apparatus 1 operates the gear pump 35 in a stable manner, and the calculated amount of adhesive can be supplied to the nozzle 45. As the roller speed is lowered, even when the cloth bonding apparatus 1 has lowered the gear speed and reduced the discharge amount of the adhesive, the transport speed of the cloth is lowered and the thickness of the adhesive applied to the cloth is made equal to the application thickness stored in the parameter table 991.

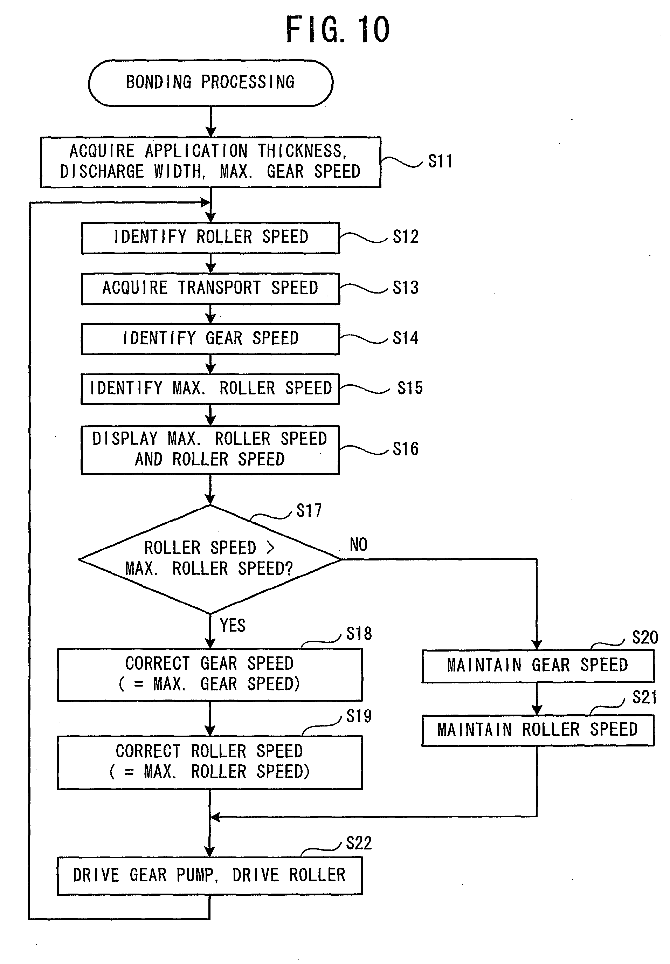

The bonding processing of the cloth bonding apparatus 1 will be explained with reference to FIG 10. When the operator inputs an operation from the keys 209 to start the bonding operation, the CPU 201 executes the bonding processing.

The CPU 201 acquires the application thickness, the discharge width, and the maximum gear speed from the parameter table 991 (step S11). The CPU 201 identifies the roller speed in accordance with the amount of depression of the pedal 206 that is depressed by the operator (step S12). For example, the CPU 201 identifies the roller speed using the following procedure.

1. The CPU 201 calculates a ratio of an actual amount of depression of the pedal 206 by the operator to a maximum amount of depression of the pedal 206.
2. The CPU 201 identifies a maximum rotation speed at which the upper feed roller 24 and the lower feed roller 25 can rotate. The maximum rotation speed at which the upper feed roller 24 and the lower feed roller 25 can rotate corresponds to a maximum rotation speed at which the motors 92 and 93 can rotate.
3. The CPU 201 multiplies the maximum rotation speed at which the upper feed roller 24 and the lower feed roller 25 can rotate by the calculated ratio.

The CPU 201 identifies the calculated result as the roller speed. The CPU 201 stores the identified roller speed in the drive condition table 211. However, a method to identify the roller speed is not limited to the above-described method.

The CPU 201 acquires the transport speed of the cloth when the upper feed roller 24 and the lower feed roller 25 are driven at the identified roller speed (step S 13). The transport speed is calculated based on the roller speed and a roller diameter of the lower feed roller 25. The CPU 201 assigns the application thickness and the discharge width acquired at step S11, and the transport speed acquired at step S13 to Formula (1), and calculates the amount of adhesive per unit time to be discharged from the nozzle 45. The CPU 201 identifies the gear speed necessary to supply the calculated amount of adhesive to the nozzle 45 (step S14). The CPU 201 stores the identified gear speed in the drive condition table 211.

The CPU 201 calculates the amount of adhesive per unit time to be supplied to the nozzle 45 when the drive gear 36 and the driven gear 37 are driven at the maximum gear speed. Hereinafter, the amount of adhesive per unit time that is supplied to the nozzle 45 when the gear pump 35 is driven at the maximum gear speed is referred to as a "maximum supply amount." The CPU 201 assigns the application thickness and the discharge width of the parameter table 991, and the maximum supply amount to Formula (1) and calculates the transport speed of the cloth. The CPU 201 identifies the roller speed to move the cloth at the calculated transport speed (step S15). The necessary roller speed that is necessary to move the cloth at the transport speed calculated from the application thickness, the discharge width and the maximum supply amount is referred to as a "maximum roller speed." The maximum roller speed is the maximum roller speed when the adhesive is applied in a stable manner at the application thickness in the parameter table 991. The CPU 201 displays the maximum roller speed identified at step S15 and the roller speed identified at step S12 on the liquid crystal display 208 (step S16). The operator can thus ascertain the maximum roller speed and the roller speed.

The CPU 201 compares the roller speed identified at step S12 and the maximum roller speed identified at step S15 (step S17). When the roller speed is equal to or less than the maximum roller speed (no at step S 17), the gear speed in the drive condition table 211 is a value that is equal to or less than the maximum gear speed. Thus, when the drive gear 36 and the driven gear 37 are driven at the gear speed in the drive condition table 211, the cloth bonding apparatus 1 can apply the adhesive in a stable manner at the application thickness in the parameter table 991.

The CPU 201 maintains the gear speed stored in the drive condition table 211 (step S20). The CPU 201 maintains the roller speed stored in the drive condition table 211 (step S21). The CPU 201 controls the motor 91 such that the motor 91 drives the drive gear 36 and the driven gear 37 at the gear speed in the drive condition table 211. The CPU 201 controls the motors 92 and 93 such that they drive the upper feed roller 24 and the lower feed roller 25 at the roller speed in the drive condition table 211. The cloth bonding apparatus 1 moves the cloth at the transport speed in accordance with the amount of depression of the pedal 206 and applies the adhesive to the cloth at the application thickness in the parameter table 991. After that, the processing returns to step S12.

When the roller speed identified at step S 12 is larger than the maximum roller speed identified at step S 15 (yes at step S 17), the gear speed in the drive condition table 211 is larger than the maximum gear speed. As a result, when the drive gear 36 and the driven gear 37 are driven at the gear speed in the drive condition table 211, the operation of the drive gear 36 and the driven gear 37 becomes unstable, and it is possible that the thickness of the adhesive applied to the cloth is not stable.

The CPU 201 corrects the gear speed in the drive condition table 211 to the maximum gear speed (step S 18), and lowers the gear speed. The CPU 201 corrects the roller speed in the drive condition table 211 to the maximum roller speed (step S 19), and lowers the roller speed. The CPU 201 controls the motor 91 such that the motor 91 drives the drive gear 36 and the driven gear 37 at the corrected gear speed. The CPU 201 controls the motors 92 and 93 such that they drive the upper feed roller 24 and the lower feed roller 25 at the corrected roller speed (step S22). At the time described above, the amount of adhesive per unit time that is discharged from the nozzle 45, the transport speed and the application thickness satisfy the relationships of Formula (1). Thus, the cloth bonding apparatus 1 can drive the gear pump 35 in a stable manner and can apply the adhesive to the cloth at the application thickness in the parameter table 991. The motor 91 rotates within a rotation speed range in which the motor 91 can rotate in a stable manner, and thus stably drives the gear pump 35. By lowering the gear speed and the roller speed, the cloth bonding apparatus 1 reliably applies the adhesive to the cloth at the application thickness in the parameter table 991. After that, the processing returns to step S12.

At step S16, the CPU 201 displays the roller speed and the maximum roller speed on the liquid crystal display 208. When the roller speed is corrected at step S19, the CPU 201 corrects the roller speed displayed on the liquid crystal display 208 to the maximum roller speed. As a consequence, the roller speed and the maximum roller speed displayed on the liquid crystal display 208 match each other. The cloth bonding apparatus 1 can correct the roller speed in order to apply the adhesive at the set thickness and the operator can verify that the desired thickness of adhesive is attached to the cloth. Even if the operator further depresses the pedal 206, the roller speed displayed on the liquid crystal display 208 does not exceed the maximum roller speed. Thus, the operator can verify that the transport speed of the cloth does not rely on the amount of depression of the pedal 206 and it is constant.

As described above, the cloth bonding apparatus 1 drives the gear pump 35 at the corrected gear speed and thus the adhesive is discharged from the nozzle 45 in a stable manner. As a result, the cloth bonding apparatus 1 can stabilize the thickness of the adhesive applied to the cloth, and the cloth can be bonded to the other cloth appropriately and with a good finish. The cloth bonding apparatus 1 drives the upper feed roller 24 and the lower feed roller 25 at the corrected roller speed. The gear speed does not exceed the maximum gear speed and thus the cloth bonding apparatus 1 can apply the desired thickness of adhesive to the cloth. As a result, the cloth bonding apparatus 1 can reliably bond the cloths.

The gear pump 35 corresponds to a supply portion of the present invention. The upper feed roller 24 and the lower feed roller 25 correspond to a transport portion of the present invention. The CPU 201 that performs the processing at step S11 and step S 13 corresponds to a first acquisition portion of the present invention. The CPU 201 that performs the processing at step S17 corresponds to a determination portion of the present invention. The CPU 201 that performs the processing at step S 18 and step S 19 corresponds to a correction portion of the present invention. The CPU 201 that performs the processing at step S22 corresponds to a control portion of the present invention. The gear speed stored in the drive condition table 211 corresponds to a supply condition of the present invention. The roller speed stored in the drive condition table 211 corresponds to a transport condition of the present invention. The CPU 201 that performs the processing at step S11 corresponds to a second acquisition portion of the present invention. The processing at step S11 and step S 13 corresponds to acquisition processing of the present invention. The processing at step S17 corresponds to determination processing of the present invention. The processing at step S18 and step S19 corresponds to correction processing of the present invention. The processing at step S22 corresponds to control processing of the present invention.

Various modifications can be made to the embodiment that is described above. For example, the maximum gear speed in the above-described embodiment is the maximum rotation speed at which the motor 91 can rotate, but the maximum gear speed may be the maximum rotation speed at which the motor 91 can rotate in a stable manner.

In the above-described embodiment, it is determined whether the gear speed becomes larger than the maximum gear speed by determining whether the roller speed is larger than the maximum roller speed (refer to step S 19 in FIG. 10). Alternatively, the cloth bonding apparatus 1 may directly determine whether the gear speed is larger than the maximum gear speed.

When the roller speed is larger than the maximum roller speed, the gear speed may be corrected to a rotation speed that is smaller than the maximum gear speed. The roller speed may be corrected to a speed that is smaller than the maximum roller speed.

The transport speed of the cloth may be directly input by the operator using the keys 209. The cloth bonding apparatus 1 may determine the gear speed and the roller speed based on she transport speed that is input by the operator.

## Claims

1.  A cloth bonding apparatus that has a nozzle (45) having a discharge opening that discharges adhesive onto a cloth, a supply portion (35) that supplies the adhesive to the nozzle, and a transport portion (24, 25) that presses and moves the cloth, the cloth bonding apparatus comprising:

    a first acquisition portion (201) that acquires an application thickness, a discharge width, and a transport speed, the application thickness being a thickness of the adhesive that is applied to the cloth, the discharge width being a width of the discharge opening in a direction that intersects with a transport direction of the cloth, and the transport speed being a speed at which the transport portion moves the cloth,

**characterized by**

a determination portion (201) that determines whether the supply portion can operate at a supply condition to apply the adhesive at the application thickness to the cloth that is moved at the transport speed;

a correction portion (201) that, when the determination portion determines that the supply portion cannot operate at the supply conditions, corrects at least one of the supply condition and a transport condition to move the cloth at the transport speed; and

a control portion (201) that controls the supply portion at a corrected supply condition when the correction portion corrects the supply condition, and controls the transport portion at a corrected transport condition when the correction portion corrects the transport condition.

2. The cloth bonding apparatus according to claim 1, wherein

the supply portion includes a gear pump (35) that is rotationally driven and feeds the adhesive,

the transport portion includes a roller (24, 25) that is rotationally driven and moves the cloth,

the supply condition is a gear speed that is a rotational speed of the gear pump required to move the cloth at the transport speed and to apply the adhesive to the cloth at the application thickness, and

the transport condition is a roller speed that is a rotational speed of the roller required to move the cloth at the transport speed.

3. The cloth bonding apparatus according to claim 2, wherein

the correction portion corrects the roller speed and the gear speed.

4. The cloth bonding apparatus according to claim 3, further comprising:

a second acquisition portion (201) that acquires a maximum gear speed that is a maximum rotational speed that can be tolerated by the gear pump;

wherein

when the roller speed is larger than a maximum roller speed, which is a rotational speed of the roller required to drive the gear pump at the maximum gear speed and to apply the adhesive to the cloth at the application thickness, the determination portion determines that the gear pump cannot be driven at the gear speed, and the correction portion corrects the gear speed to the maximum gear speed and corrects the roller speed to the maximum roller speed.

5. A computer-readable storage medium storing a control program that is executed by a cloth bonding apparatus that has a nozzle having a discharge opening that discharges adhesive onto a cloth, a supply portion that supplies the adhesive to the nozzle, and a transport portion that presses and moves the cloth, wherein

the control program includes instructions that command a computer of the cloth bonding apparatus to perform the steps of:

acquiring an application thickness, a discharge width, and a transport speed, the application thickness being a thickness of the adhesive that is applied to the cloth, the discharge width being a width of the discharge opening in a direction that intersects with a transport direction of the cloth, and the transport speed being a speed at which the transport portion moves the cloth,

**characterized in that**

the control program includes instructions that command the computer of the cloth bonding apparatus to perform the steps of:

determining whether the supply portion can operate at a supply condition to apply the adhesive at the application thickness to the cloth that is moved at the transport speed;

correcting, when it is determined in the determining step that the supply portion cannot operate at the supply condition, at least one of the supply condition and a transport condition to move the cloth at the transport speed;, and

controlling the supply portion at a corrected supply condition when the supply condition is corrected in the correcting step, and controlling the transport portion at a corrected transport condition when the transport condition is corrected in the correcting step.

**Patentansprüche**

1. Tuchfügegerät, das eine Düse (45) mit einer Auslassöffnung, die ein Klebemittel auf ein Tuch auslässt, einen Zuführabschnitt (35), der das Klebemittel zu der Düse zuführt, und einen Transportabschnitt (24, 25) hat, der das Tuch drückt und bewegt, wobei das Tuchfügegerät Folgendes aufweist:

   einen ersten Akquisitionsabschnitt (201), der eine Auftragsdicke, eine Auslassbreite und eine Transportgeschwindigkeit akquiriert, wobei die Auftragsdicke eine Dicke des Klebemittels ist, das auf das Tuch aufgebracht wird, die Auslassbreite eine Breite der Auslassöffnung in einer Richtung ist, die eine Transportrichtung des Tuchs schneidet, und die Transportgeschwindigkeit eine Geschwindigkeit ist, mit der der Transportabschnitt das Tuch bewegt,
   **gekennzeichnet durch**
   einen Bestimmungsabschnitt (201), der bestimmt, ob der Zuführabschnitt in einem Zuführzustand zum Auftragen des Klebemittels mit der Auftragsdicke auf das Tuch betrieben werden kann, das mit der Transportgeschwindigkeit bewegt wird;
   einen Korrekturabschnitt (201), der zumindest den Zuführzustand oder einen Transportzustand zum Bewegen des Tuchs mit der Transportgeschwindigkeit korrigiert, wenn der Bestimmungsabschnitt bestimmt, dass der Zuführabschnitt nicht in den Zuführzuständen betrieben werden kann; und
   einen Steuerabschnitt (201), der den Zuführabschnitt in einem korrigierten Zuführzustand steuert, wenn der Korrekturabschnitt den Zuführzustand korrigiert, und den Transportabschnitt in einem korrigierten Transportzustand steuert, wenn der Korrekturabschnitt den Transportzustand korrigiert.

2. Tuchfügegerät gemäß Anspruch 1, wobei
   der Zuführabschnitt eine Zahnradpumpe (35) aufweist, die drehend angetrieben wird und das Klebemittel fördert,
   der Transportabschnitt eine Walze (24, 25) aufweist, die drehend angetrieben wird und das Tuch bewegt,
   der Zuführzustand eine Zahnraddrehzahl ist, die eine Drehzahl der Zahnradpumpe ist, die zum Bewegen des Tuchs mit der Transportgeschwindigkeit und zum Auftragen des Klebemittels auf das Tuch mit der Auftragsdicke erforderlich ist, und
   der Transportzustand eine Walzendrehzahl ist, die eine Drehzahl der Walze ist, die zum Bewegen des Tuchs mit der Transportgeschwindigkeit erforderlich ist.

3. Tuchfügegerät gemäß Anspruch 2, wobei
   der Korrekturabschnitt die Walzendrehzahl und die Zahnraddrehzahl korrigiert.

4. Tuchfügegerät gemäß Anspruch 3, des Weiteren mit:

   einem zweiten Akquisitionsabschnitt (201), der eine maximale Zahnraddrehzahl akquiriert, die eine maximale Drehzahl ist, die durch die Zahnradpumpe toleriert werden kann; wobei
   wenn die Walzendrehzahl größer ist als eine maximale Walzendrehzahl, die eine Drehzahl der Walze ist, die zum Antreiben der Zahnradpumpe mit der maximalen Zahnraddrehzahl und zum Auftragen des Klebemittels auf das Tuch mit der Auftragsdicke ist, der Bestimmungsabschnitt bestimmt, dass die Zahnradpumpe nicht mit der Zahnraddrehzahl angetrieben werden kann, und der Korrekturabschnitt korrigiert die Zahnraddrehzahl auf die maximale Zahnraddrehzahl und korrigiert die Walzendrehzahl auf die maximale Walzendrehzahl.

5. Computerlesbares Speichermedium, das ein Steuerprogramm speichert, das durch ein Tuchfügegerät ausgeführt wird, das eine Düse mit einer Auslassöffnung, die ein Klebemittel auf ein Tuch auslässt, einen Zuführabschnitt, der das Klebemittel zu der Düse zuführt, und einen Transportabschnitt hat, der das Tuch drückt und bewegt, wobei das Steuerprogramm Befehle aufweist, die einem Computer des Tuchfügegeräts die Durchführung der folgenden Schritte befiehlt:

   Akquirieren einer Auftragsdicke, einer Auslassbreite und einer Transportgeschwindigkeit, wobei die Auftragsdicke eine Dicke des Klebemittels ist, das auf das Tuch aufgetragen wird, die Auslassbreite eine Breite der Auslassöffnung in einer Richtung ist, die eine Transportrichtung des Tuchs schneidet, und die Transportgeschwindigkeit eine Geschwindigkeit ist, mit der der Transportabschnitt das Tuch bewegt,
   **dadurch gekennzeichnet, dass**
   das Steuerprogramm Befehle aufweist, die den Computer des Tuchfügegeräts die Durchführung der folgenden Schritte befehlen:

Bestimmen, ob der Zuführabschnitt in einem Zuführzustand zum Auftragen des Klebemittels mit der Auftragsdicke auf das Tuch betrieben werden kann, das mit der Transportgeschwindigkeit bewegt wird;

Korrigieren zumindest des Zuführzustands und eines Transportzustands zum Bewegen des Tuchs mit der Transportgeschwindigkeit, wenn bei dem Bestimmungsschritt bestimmt wird, dass der Zuführabschnitt nicht in dem Zuführzustand betrieben werden kann; und

Steuern des Zuführabschnitts in einem korrigierten Zuführzustand, wenn der Zuführzustand bei dem Korrekturschritt korrigiert wird, und Steuern des Transportabschnitts in einem korrigierten Transportzustand, wenn der Transportzustand bei dem Korrekturschritt korrigiert wird.

## Revendications

1. Appareil de liaison de tissus qui a une buse (45) ayant une ouverture de décharge qui décharge de l'adhésif sur un tissu, une partie d'alimentation (35) qui amène l'adhésif à la buse, et une partie de transport (24, 25) qui comprime et déplace le tissu, l'appareil de liaison de tissus comprenant :

   une première partie d'acquisition (201) qui acquiert une épaisseur d'application, une largeur de décharge et une vitesse de transport, l'épaisseur d'application étant une épaisseur de l'adhésif qui est appliqué sur le tissu, la largeur de décharge étant une largeur de l'ouverture de décharge dans une direction qui coupe une direction de transport du tissu, et la vitesse de transport étant une vitesse à laquelle la partie de transport déplace de le tissu,

   **caractérisé par** :

   une partie de détermination (201) qui détermine si la partie d'alimentation peut fonctionner à une condition d'alimentation pour appliquer l'adhésif à l'épaisseur d'application, sur le tissu qui est déplacé à la vitesse de transport ;

   une partie de correction (201) qui, lorsque la partie de détermination détermine que la partie d'alimentation ne peut pas fonctionner aux conditions d'alimentation, corrige au moins l'une parmi la condition d'alimentation et une condition de transport pour déplacer le tissu à la vitesse de transport ; et

   une partie de commande (201) qui commande la partie d'alimentation à la condition d'alimentation corrigée lorsque la partie de correction corrige la condition d'alimentation, et commande la partie de transport à une condition de transport corrigée lorsque la partie de correction corrige la condition de transport.

2. Appareil de liaison de tissus selon la revendication 1, dans lequel :

   la partie d'alimentation comprend une pompe à engrenages (35) qui est entraînée de manière rotative et fournit l'adhésif,

   la partie de transport comprend un rouleau (24, 25) qui est entraîné de manière rotative et déplace le tissu,

   la condition d'alimentation est une vitesse d'engrenage qui est une vitesse de rotation de la pompe à engrenages requise pour déplacer le tissu à la vitesse de transport et pour appliquer l'adhésif sur le tissu à l'épaisseur d'application, et

   la condition de transport est une vitesse de rouleau qui est une vitesse de rotation du rouleau requise pour déplacer le tissu à la vitesse de transport.

3. Appareil de liaison de tissus selon la revendication 2, dans lequel :

   la partie de correction corrige la vitesse de rouleau et la vitesse d'engrenage.

4. Appareil de liaison de tissus selon la revendication 3, comprenant en outre :

   une seconde partie d'acquisition (201) qui acquiert une vitesse d'engrenage maximum qui est une vitesse de rotation maximum qui peut être tolérée par la pompe à engrenages ;

   dans lequel :

   lorsque la vitesse de rouleau est supérieure à une vitesse de rouleau maximum, qui est une vitesse de rotation du rouleau requise pour entraîner la pompe à engrenages à la vitesse d'engrenage maximum et pour appliquer l'adhésif sur le tissu à l'épaisseur d'application, la partie de détermination détermine que la pompe à engrenages ne peut pas être entraînée à la vitesse d'engrenage, et la partie de correction corrige la vitesse d'engrenage par la vitesse d'engrenage maximum et corrige la vitesse de rouleau par la vitesse de rouleau maximum.

5. Support de stockage lisible par un ordinateur stockant un programme de commande qui est exécuté par un appareil de liaison de tissus qui a une buse ayant une ouverture de décharge qui décharge de l'adhésif sur un tissu, une partie d'alimentation qui amène l'adhésif à la buse, et une partie de transport qui comprime et déplace le tissu, dans lequel :

le programme de commande comprend des instructions qui commandent un ordinateur de l'appareil de liaison de tissus pour réaliser les étapes consistant à :

acquérir une épaisseur d'application, une largeur de décharge et une vitesse de transport, l'épaisseur d'application étant une épaisseur de l'adhésif qui est appliqué sur le tissu, la largeur de décharge étant une largeur de l'ouverture de décharge dans une direction qui coupe  une direction de transport du tissu, et la vitesse de transport étant une vitesse à laquelle la partie de transport déplace le tissu,
**caractérisé en ce que** :

le programme de commande comprend des instructions qui commandent l'ordinateur de l'appareil de liaison de tissus pour réaliser les étapes consistant à :

déterminer si la partie d'alimentation peut fonctionner à une condition d'alimentation pour appliquer l'adhésif à l'épaisseur d'application sur le tissu qui est déplacé à la vitesse de transport ;
corriger, lorsque l'on détermine à l'étape de détermination que la partie d'alimentation ne peut pas fonctionner à la condition d'alimentation, au moins l'une parmi la condition d'alimentation et une condition de transport pour déplacer le tissu à la vitesse de transport ; et
commander la partie d'alimentation à une condition d'alimentation corrigée lorsque la condition d'alimentation est corrigée à l'étape de correction, et commander la partie de transport à une condition de transport corrigée lorsque la condition de transport est corrigée à l'étape de correction.

# FIG. 1

# FIG. 2

# FIG. 3

# FIG. 4

# FIG. 5

# FIG. 6

# FIG. 7

| GEAR SPEED (rpm) | ROLLER SPEED (rpm) |
|---|---|
| □□□ | ××× |

211

# FIG. 8

991

| APPLICATION THICKNESS (m) | DISCHARGE WIDTH (m) | MAX. GEAR SPEED (rpm) | OPERATION MODE |
|---|---|---|---|
| ○○○ | ◎◎◎ | △△△ | PRIORITY TO THICKNESS OR PRIORITY TO SPEED |

# FIG. 9

# FIG. 10

```
        BONDING PROCESSING
              │
              ▼
┌─────────────────────────────────┐
│ ACQUIRE APPLICATION THICKNESS,  │ ∿ S11
│ DISCHARGE WIDTH, MAX. GEAR SPEED│
└─────────────────────────────────┘
              │
              ▼
      ┌──────────────────────┐
      │ IDENTIFY ROLLER SPEED│ ∿ S12
      └──────────────────────┘
              │
              ▼
      ┌──────────────────────┐
      │ ACQUIRE TRANSPORT SPEED│ ∿ S13
      └──────────────────────┘
              │
              ▼
      ┌──────────────────────┐
      │ IDENTIFY GEAR SPEED  │ ∿ S14
      └──────────────────────┘
              │
              ▼
      ┌──────────────────────┐
      │ IDENTIFY MAX. ROLLER SPEED │ ∿ S15
      └──────────────────────┘
              │
              ▼
      ┌──────────────────────┐
      │ DISPLAY MAX. ROLLER SPEED │ ∿ S16
      │ AND ROLLER SPEED     │
      └──────────────────────┘
              │
              ▼           ∿ S17
           ◇────────────────◇           NO
          ╱ ROLLER SPEED >   ╲ ─────────────┐
          ╲ MAX. ROLLER SPEED? ╱             │
           ◇────────────────◇               │
              │ YES                          ▼
              ▼         ∿ S18         ┌──────────────────┐
      ┌──────────────────────┐        │ MAINTAIN GEAR SPEED │ ∿ S20
      │ CORRECT GEAR SPEED   │        └──────────────────┘
      │ ( = MAX. GEAR SPEED) │                │
      └──────────────────────┘                ▼           ∿ S21
              │         ∿ S19         ┌──────────────────┐
              ▼                       │ MAINTAIN ROLLER SPEED │
      ┌──────────────────────┐        └──────────────────┘
      │ CORRECT ROLLER SPEED │                │
      │ ( = MAX. ROLLER SPEED) │              │
      └──────────────────────┘                │
              │←─────────────────────────────┘
              ▼         ∿ S22
      ┌──────────────────────┐
      │ DRIVE GEAR PUMP, DRIVE ROLLER │
      └──────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010180487 A